# EUROPÄISCHE PATENTANMELDUNG

(11) **EP 1 400 167 A2**
(43) Veröffentlichungstag der Anmeldung: **24.03.2004**
(21) Anmeldenummer: 03021270.8
(22) Anmeldetag: 19.09.2003
(51) Int. Cl.: A01K 1/00

(54) **Abluftkamin, insbesondere für Tierstallungen**

(30) Priorität: 19.09.2002 DE 10243639
(71) Anmelder: Pollmeier, Thomas, 33758 Schloss Holte Stukenbrock (DE)
(72) Erfinder: Pollmeier, Thomas, 33758 Schloss Holte Stukenbrock (DE)
(74) Vertreter: Habbel, Ludwig (Lutz), Dipl.-Ing.

(57) **Zusammenfassung**

Die Erfindung bezieht sich auf einen Abluftkamin,
insbesondere für Tierstallungen,
bestehend aus mindestens zwei miteinander verbindbaren Kaminwandungselementen,
gekennzeichnet durch mindestens ein Wandungselement 1a, an dem ein Verschluss angeordnet ist zur Befestigung dieses Wandungselements 1a an einem benachbarten Wandungselement 1b.

## Beschreibung

Abluftkamine sind vielerorts im Einsatz, insbesondere im Bereich von Tierstallungen, um die im Stall verbrauchte Luft an die Atmosphäre abzugeben und diese Abgabe erfolgt über den Abluftkamin in einer bestimmten Höhe, um hier Geruchsbelästigungen der Umgebung gering zu halten.

Die Abluftkamine erreichen zum Teil einige Meter Höhe und aufgrund Ihrer meistens runden Bauform sind sie aufgrund der sperrigen Bauweise nur sehr umständlich bzw. sehr kostenintensiv zu transportieren, sodass die Transportkosten derartiger Abluftkamine insbesondere, wenn diese von der Fertigungsstätte in das Ausland zu transportieren sind, einen hohen Prozentsatz an den Gesamtkosten einnehmen.

Um die Transportkosten derartiger Abluftkamine für Tierstallungen geringer zu halten, ist es bereits aus der Praxis bekannt, diese Abluftkamine in einzelnen Segmenten, das heißt, halbschalenförmig, auszuliefern und anschließend werden die beiden Halbschalen auf dem Dach der Stallung zusammengesetzt und über ein Metallspannband miteinander verbunden. Diese Art der Verbindung der einzelnen Elemente eines Abluftkamins ist jedoch nachteilig, da zur Montage mindestens zwei Personen benötigt werden, da eine Person die miteinander zu befestigenden Kaminwandungselemente festhalten muss und eine andere Person muss das bzw. die Spannbänder um den Kamin legen und befestigen. Dies ist zeitaufwendig und daher teuer. Zudem sind neben dem eigentlichen Kamin zusätzliche Befestigungselemente erforderlich, die verloren gehen können. Zusätzlich kann sich das Spannband nach jahrelangem Gebrauch lockern, zum Beispiel aufgrund von Temperaturschwankungen und Wind, sodass ein sicherer Halt der Kamin-Wandungselemente aneinander über die Jahre hinweg nicht gewährleistet ist. Zudem sind weitere Befestigungselemente, wie Spannbänder oder Rohrschellen, teuer und erhöhen die Gesamtkosten eines Abluftkamins wesentlich.

Der Erfindung liegt die Aufgabe zugrunde, einen Abluftkamin insbesondere für Tierstallungen zu schaffen, der zum einen kostengünstig transportierbar ist und der zum anderen einfach und dauerhaft montierbar ist.

Diese der Erfindung zugrundeliegende Aufgabe wird durch die Lehre des kennzeichnenden Teils des Hauptanspruches gelöst.

Mit anderen Worten ausgedrückt, wird ein Abluftkamin insbesondere für Tierstallungen vorgeschlagen, der aus mindestens zwei miteinander zu verbindenden Wandungselementen besteht, wobei die Wandungselemente selbst über Verschlussmittel verfügen, um eine Befestigung der Wandungselemente miteinander zu erreichen.

Vorteilhafte Ausgestaltungen sind in den Unteransprüchen erläutert.

In vorteilhafter Ausgestaltung ist das Verschlussmittel an der Stirnseite eines Wandungselementes angeordnet, die dem damit zu verbindendem Wandungselement zugewandt ist.

In vorteilhafter Ausgestaltung weist jedes zu verbindende Wandungselement des Abluftkamins ein Verschlussmittel auf, um eine dauerhafte Verbindung der Wandungselemente zu erreichen.

Eine einfache Art der Verbindung der Wandungselemente miteinander wird durch einen Klemmverschluss erreicht, der es in bevorzugter Ausführungsform gestattet, die Montage des Abluftkamins ohne zusätzliches Werkzeug vorzunehmen.

Wenn ein entsprechender Klemmverschluss nicht punktuell vorgesehen ist, sondern über die gesamte Kontaktfläche der zu verbindenden Wandungselemente, wird insgesamt eine hohe Klemmkraft erreicht und insgesamt eine gute Abdichtung der Wandungselemente erzielt.

In vorteilhafter Ausgestaltung weist ein entsprechender Klemmverschluss auf der einen Verbindungsseite einen Vorsprung auf, der auf der anderen Verbindungsseite, das heißt, auf der Seite des weiteren damit zu verbindenden Wandungselementes in eine Vertiefung eingesetzt werden soll, wobei es vorteilhaft ist, in dem vorderen Bereich des Vorsprunges eine Erweiterung vorzusehen und in dem hinteren Bereich der Vertiefung eine Aufweitung zu versehen, um durch diese Art und Weise eine klemmende Verbindung zwischen beiden Wandungselementen zu erhalten.

Wenn jedes miteinander zu verbindende Wandungselement sowohl einen Vorsprung als auch eine Vertiefung aufweist, wird durch diese Ausbildung also eine doppelt so starke Klemmkraft des vorgeschlagenen Klemmverschlusses erhalten.

In vorteilhafter Ausgestaltung sind die Wandungselemente mit einer Dämmung versehen, um eine frühzeitige Kondensation innerhalb des Abluftkamins zu vermeiden und um eine Schalldämmung zu erhalten, wobei sich als Dämmung insbesondere aushärtende Schäume bewährt haben, wie beispielsweise Polyurethanschäume. Da die Dämmung direkt an den Wandungselementen angeordnet ist, entfällt eine nachträgliche Dämmung des Kamins.

An der Außenseite der Wandungselemente ist in vorteilhafter Weise eine Deckschicht ausgebildet, die umweltresistent ist, das heißt, insbesondere UV-stabilisiert, und die zum Beispiel auch wasserresistent in vorteilhafter Ausgestaltung ist, um eine Reinigung des Abluftkamins zum Beispiel mit einem Hochdruckreiniger zu ermöglichen.

Eine vorteilhafte Ausgestaltung des Wandungselementes hat sich ergeben, wenn dieses als Sandwich-Konstruktion ausgebildet ist, das heißt, mit einer harten äußeren und einer harten inneren Deckschicht sowie einer dazwischen angeordneten Wärmedämmung, wie beispielsweise aus PU-Schäumen.

Eine leichte und dennoch resistente Deckschicht ist gegeben, wenn diese aus Kunststoff bzw. aus GFK hergestellt ist.

Ein Ausführungsbeispiel der Erfindung wird aus den Zeichnungen ersichtlich, wobei in
- Fig. 1: zwei benachbarte, noch nicht miteinander verbundene Wandungselemente darstellt,
- Fig. 2: zeigt zwei miteinander verbundene Wandungselemente und
- Fig. 3: zeigt im Querschnitt einen aus zwei miteinander verbundenen Wandungselementen bestehenden Abluftkamin.

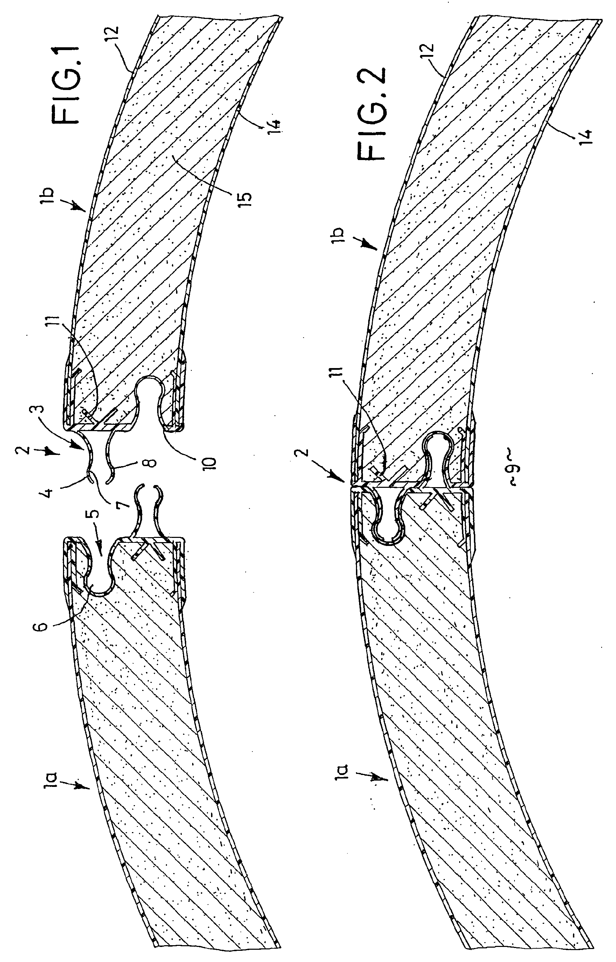

Bezug nehmend auf Fig. 1 sind zwei Wandungselemente 1a, 1b eines Abluftkamins dargestellt, die an ihrer einander zugewandten Stirnseite jeweils einen Verschluss aufweisen, der in dieser Ausführung als Klemmverschluss 2 ausgebildet ist, um diese beiden Wandungselemente 1a und 1b miteinander zu verbinden.

Der Klemmverschluss 2 ist in diesem Ausführungsbeispiel als Profilstrang ausgebildet, der sich über die gesamte Länge der einander gegenüber stehenden Stirnseiten der Wandungselemente 1a, 1b erstreckt und der Klemmverschluss 2 ist in diesem Ausführungsbeispiel aus Kunststoff hergestellt, sodass eine einfache kostengünstige Herstellung möglich ist und zudem ein leichter und haltbarer Verschluss gewährleistet ist. Der Klemmverschluss 2 besteht jeweils aus einem Vorsprung 3, der an seiner der Stirnseite abgewandten vorderen Seite eine Erweiterung 4 aufweist und dazu beabstandet weist der Klemmverschluss eine Vertiefung 5 auf, die an ihrer der Außenseite rückwärts gelegenen Endung eine Aufweitung 6 aufweist. Wie aus Fig. 2 ersichtlich ist, gerät bei einem Aneinanderfügen der Wandungselemente 1 a und 1 b der Vorsprung 3 in die Vertiefung 5 und verrastet dort bzw. klemmt dort ein und um die Wandungselemente 1 a und 1 b wieder auseinander zu bekommen, muss eine entsprechende Kraft eingesetzt werden, sodass sich die beiden Klemmhälften 7 und 8 des Vorsprungs von einander wegbewegen, sodass anschließend der Vorsprung 3 aus der Vertiefung 5 wieder herausgezogen werden kann.

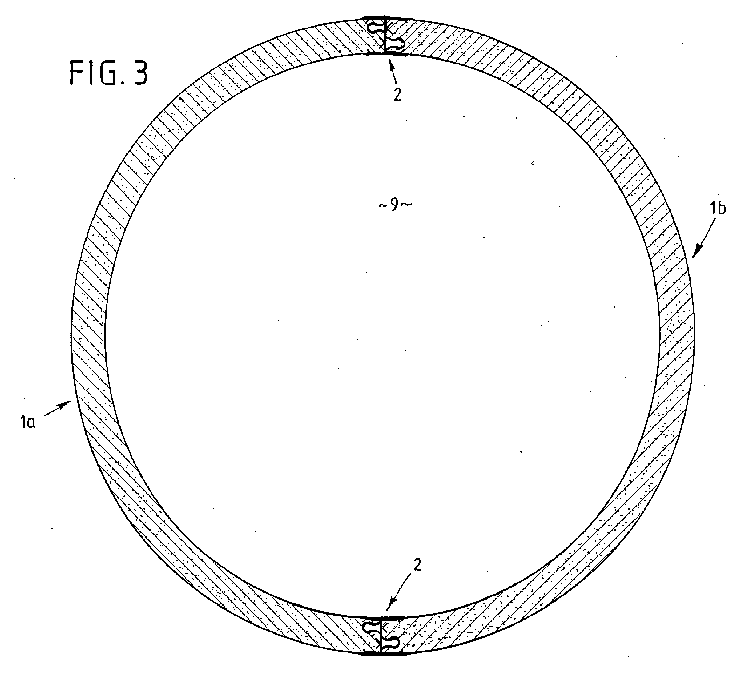

In diesem Ausführungsbeispiel weist jedes Wandungselement 1a und 1b eine entsprechende Ausbildung mit Vorsprung 3 und Vertiefung 5 auf, so dass es sich bei dem Klemmverschluss 2 des Elementes 1a und des Elementes 1b jeweils um das gleiche Formteil, jedoch in zusammengesetzter Einbaulage handelt. In zusammengesetztem Zustand (Fig. 2 u. Fig. 3) befinden sich somit jeweils zwei Vorsprünge innerhalb von zwei Vertiefungen, sodass hier eine doppelte Klemmwirkung erreicht wird.

Hierdurch wird nicht nur eine hohe Klemm- bzw. Verschlusswirkung erreicht, sondern auch eine ideale Abdichtung des Inneren 9 des Abluftkamins, sodass hier ein Entweichen von Abluft durch den Klemmverschluss 2 nicht möglich ist.

Ein großer Vorteil der vorgeschlagenen Verschlussausbildung ist, dass ein Zusammensetzen der Wandungselemente 1a und 1b ohne jegliches Werkzeug möglich ist und die Montage mit lediglich einer Person möglich ist. Auch nach Jahren kann eine leichte Demontage ohne Werkzeug erfolgen, ohne dass die Gefahr besteht, dass zusätzlichen Schrauben oder dergleichen durch Witterungseinflüsse nicht mehr betätigt werden können.

Ein weiterer Vorteil der vorgeschlagenen Verschlussausbildung ist, dass kaum Überstand im Bereich des Klemmverschlusses 2 über die Außenseite oder Innenseite der Wandungselemente 1a und 1b ausgebildet ist, das heißt, eine einfache Reinigung sowohl der Außen- als auch der Innenseite ist möglich.

Die eigentlichen Profilleisten 10 weisen einwärts gerichtete Stege 11 auf, um eine gute Befestigung der Profilleisten 10 mit den eigentlichen Wandungselemente 1a und 1b zu erreichen. Diese bestehen aus einer Sandwich-Konstruktion, wobei die äußere Deckschicht 12 und die innere Deckschicht 14 aus GFK oder sonstigem geeigneten Kunststoff bestehen können, wobei die äußere Deckschicht insbesondere UV-stabilisiert und auch Hochdruckreiniger resistent ausgebildet ist. Zwischen den beiden Deckschichten 12 und 14 ist eine Dämmung ausgebildet, die in diesem Ausführungsbeispiel aus PU-Schaum 15 ausgebildet ist. Da die Dämmung bereits werkseitig montiert ist, entfällt ein nachträgliches Dämmen eines bereits montierten Kamins, was ein wesentlicher Vorteil der vorgeschlagenen Vorrichtung ist.

Selbstverständlich kann anstatt der vorgeschlagenen Klemmverbindung eine Verrasterung oder eine Klippverbindung oder dergleichen von zwei Wandungselementen miteinander verwendet werden.

Selbstverständlich kann sowohl das Dämmmaterial als auch die Deckschichten aus anderen geeigneten Materialien ausgebildet sein.

In Fig. 3 ist ein Querschnitt, das heißt, ein Abluftkamin dargestellt mit dem Kamininneren 9 sowie den halbschalenförmigen Wandungselementen 1a, 1b. Selbstverständlich können die Verschlusselemente nicht nur vertikal, sondern auch horizontal angeordnet sein und es ist möglich, den Abtuftkamin in andere Wandungssegmente aufzuteilen als die gezeigten Halbschalen.

## Patentansprüche

1. Abluftkamin, insbesondere für Tierstallungen, bestehend aus mindestens zwei miteinander verbindbaren Kaminwandungselementen,
**gekennzeichnet durch** mindestens ein Wandungselement 1a, an dem ein Verschluss angeordnet ist zur Befestigung dieses Wandungselements 1a an einem benachbarten Wandungselement 1b.

2. Abluftkamin gemäß Anspruch 1,
**gekennzeichnet durch** die Anordnung des Verschlusses an der dem benachbarten Wandungselement 1b zugewandten Stirnseite des den Verschluss aufweisenden Wandungselementes 1a.

3. Abluftkamin gemäß einem der vorhergehenden Ansprüche,
**gekennzeichnet durch** jeweils mindestens einen Verschluss an jedem miteinander zu verbindenden Wandungselement 1a und 1b.

4. Abluftkamin gemäß einem der vorhergehenden Ansprüche,
**gekennzeichnet durch** die Ausbildung des Verschlusses als Klemmverschluss 2.

5. Abluftkamin gemäß Anspruch 4,
**gekennzeichnet durch** die Ausbildung des Klemmverschlusses 2 als Klemmprofil, das sich im wesentlichen über die gesamte Länge des zu verbindenden Wandelementes 1a, 1b erstreckt.

6. Abluftkamin gemäß Anspruch 4 oder 5,
**gekennzeichnet durch** den Klemmverschluss 2, der auf der Seite des einen Wandungselementes 1a einen Vorsprung 3 aufweist, der auf der Seite des anderen Wandungselementes 1b in eine Vertiefung 5 einführbar ist.

7. Abluftkamin gemäß Anspruch 6,
**gekennzeichnet durch** den in seinem vorderen Bereich eine Erweiterung 4 aufweisenden Vorsprung und die in Vertiefung 5, die in ihrem rückseitigen Bereich eine Aufweitung 6 aufweist.

8. Abluftkamin gemäß Anspruch 6 oder 7,
**gekennzeichnet durch** die Anordnung sowohl des Vorsprungs 3 als auch der Vertiefung 5 auf jedem ein Verschluss aufweisenden Wandungselement 1a, 1b.

9. Abluftkamin gemäß einem der vorhergehenden Ansprüche,
**gekennzeichnet durch** die eine Dämmung, insbesondere zur Vermeidung von Kondenzwasser und zur Schalldämmung (zum Beispiel von Ventilatorgeräuschen) aufweisenden Wandungselemente 1a, 1b.

10. Abluftkamin gemäß Anspruch 9,
**gekennzeichnet durch** die aus PU-Schaum ausgebildete Wärmedämmung.

11. Abluftkamin gemäß einem der vorhergehenden Ansprüche,
**gekennzeichnet durch** die an ihrer Außenseite eine umweltresistente, insbesondere UV-stabilisierte Deckschicht 12 aufweisenden Wandungselemente 1a, 1b.

12. Abluftkamin gemäß einem der vorhergehenden Ansprüche,
**gekennzeichnet durch** die Sandwich-artig ausgebildeten Wandungselemente 1a und 1b mit einer umweltresistenten äußeren Deckschicht 12 und einer inneren Deckschicht 14 und einer dazwischen angeordneten Dämmung, insbesondere zur Vermeidung von Kondenzwasser und zur Schalldämmung (zum Beispiel von Ventilatorgeräuschen).

13. Abluftkamin gemäß einem der vorhergehenden Ansprüche,
**gekennzeichnet durch** die aus GFK ausgebildete Deckschicht 12, 14.
